# EUROPEAN PATENT SPECIFICATION

(11) **EP 2 932 058 B1**
(45) Date of publication and mention of the grant of the patent: **17.02.2021**
(21) Application number: 13806048.8
(22) Date of filing: 12.12.2013
(51) Int. Cl.: F01N 5/02, F01N 5/04, F01D 15/10, F02B 37/00, F02B 37/18, F02B 37/22

(54) **TURBOGENERATOR SYSTEM AND METHOD**
TURBOGENERATORSYSTEM UND VERFAHREN
SYSTÈME DE TURBO-GÉNÉRATRICE ET PROCÉDÉ

(30) Priority: 13.12.2012 GB 201222491
(43) Date of publication of application: 21.10.2015
(73) Proprietor: BOWMAN POWER GROUP LIMITED, Hampshire SO14 5QY (GB)
(72) Inventor: CUSWORTH, Stephen, Southampton Hampshire SO14 5QY (GB); MCGUIRE, Jonathon, Southampton Hampshire SO14 5QY (GB); DOWMAN-TUCKER, Paul, Southampton Hampshire SO14 5QY (GB); SZYMKO, Shinri, Southampton Hampshire SO14 5QY (GB); KING, Toby, Southampton Hampshire SO14 5QY (GB)
(74) Representative: Murgitroyd & Company
(86) International application number: PCT/GB2013/053277
(87) International publication number: WO 2014/091235

(56) References cited:
- EP-A1- 2 372 127
- EP-A1- 2 492 458
- JP-A- S59 141 712
- US-A1- 2010 089 056
- US-A1- 2010 154 414

## Description

This invention concerns a turbogenerator system to extract energy from a gas stream, and a method for extracting energy from a gas stream.

The invention finds particular application in a turbogenerator system and method to extract energy from a gas stream such as: the exhaust from a compression ignition diesel engine, exhaust from a spark ignition gas engine, steam, an organic rankine fluid or pressurised gas. For example, the system and method of the invention may be employed for recovering exhaust energy from fluid in an exhaust conduit of a reciprocating engine.

Prior art turbogenerator systems (see e.g. US 2010/154414 A1) have limitations in their ability to maximise the usefulness and efficiency of current turbogenerator exhaust energy recovery systems, as there is insufficient control of the exhaust flow characteristics in such systems.

The present invention makes use of valves and/or other control methods in a turbogenerator system and method to address these limitations.

According to a first aspect of the present invention there is provided a method for recovering exhaust energy from exhaust fluid in an exhaust conduit of a reciprocating engine. The method comprising: driving a turbocharger turbine of a turbocharger by means of the exhaust fluid; driving a turbogenerator turbine of a turbogenerator by means of the exhaust fluid; arranging an alternator on an output shaft of the turbogenerator turbine to convert shaft power into electrical power; and controlling operation of the turbogenerator turbine in dependence upon operating conditions within the system. The step of controlling including: regulating fluid flow to the turbogenerator turbine by means of at least one turbogenerator regulator valve; monitoring whether a waste-gate valve connected in parallel with one or both of the turbocharger turbine and the turbogenerator turbine has opened up beyond a predetermined amount, and if so generating actuating signals for controlling opening the at least one turbogenerator regulator valve to regulate fluid flow to the turbogenerator turbine and opening initiating valve control of the at least one turbogenerator regulator valve.

The invention is employed for recovering exhaust energy from fluid in an exhaust conduit of a reciprocating engine. The system upon which the method of the invention is performed comprises a turbocharger having a turbocharger turbine arranged in fluid communication with the exhaust conduit for carrying the engine exhaust stream to be driven by fluid in the exhaust conduit. The system upon which the method of the invention is performed also comprises a turbogenerator that is arranged in a series configuration or in a parallel configuration with the turbocharger.

The system upon which the method of the invention is performed comprises a control system. The control system comprises a waste-gate valve connected in parallel with one or both of the turbocharger turbine and the turbogenerator turbine and at least one turbogenerator regulator valve. Each valve in the system upon which the method is performed may be either manual or automatic, and either an on/off valve or a modulating valve.

Preferably, the step of controlling may comprise regulating an amount of fluid flow bypassing an inlet of the turbogenerator turbine.

It may also be preferable for the step of controlling to comprise controlling fluid flow into an inlet of the turbogenerator turbine.

Preferably, the step of controlling may comprise the step of ramping the turbogenerator turbine up to running speed and holding the valve positions for the at least one valve.

Preferably, the at least turbogenerator regulator valve one valve may comprise a bypass valve arranged for regulating an amount of fluid flow bypassing the inlet of the turbogenerator turbine.

Alternatively, it may be preferable for the at least one turbogenerator regulator valve to comprise an isolating valve connected upstream of the inlet of the turbogenerator turbine for controlling fluid flow into the inlet of the turbogenerator turbine.

It may also be preferable for the at least one turbogenerator regulator valve to comprise a three way regulator valve connected upstream of the inlet of the turbogenerator turbine and arranged respectively for controlling fluid flow into the inlet of the turbogenerator turbine and for regulating an amount of fluid flow bypassing the inlet of the turbogenerator turbine.

The first aspect of the present invention may further comprises the optional and preferred features as claimed in the dependent claims.

The invention will now be described further, by way of example, with reference to the accompanying drawings in which:

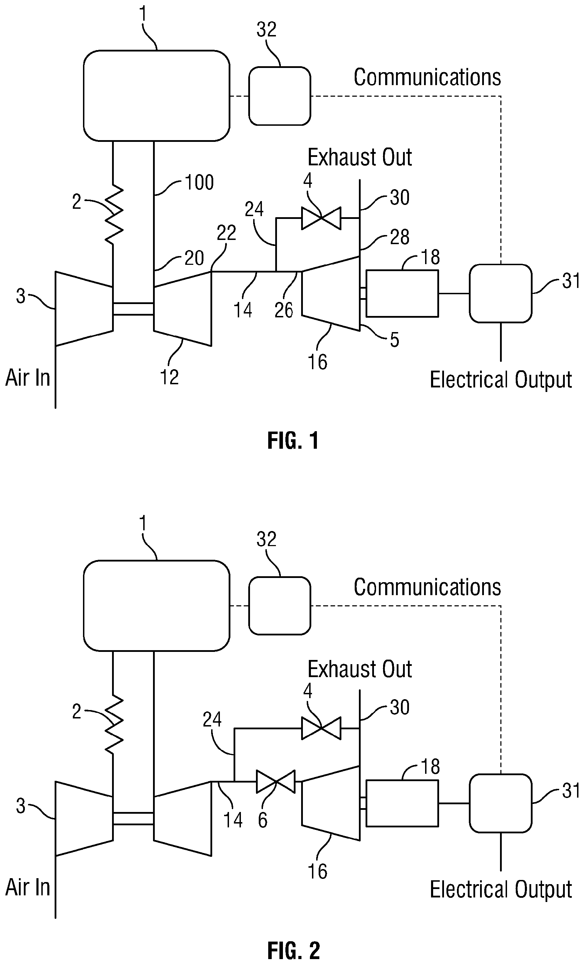

Figure 1 is a schematic of a first example of a turbogenerator system not accordance with the present invention, in which the turbogenerator is in a series configuration and has a turbogenerator regulator valve;
Figure 2 is a schematic of a second example of a turbogenerator system not in accordance with the present invention, in which the turbogenerator and turbocharger are in a series configuration and turbogenerator has a turbogenerator regulator valve and a turbogenerator isolator valve;

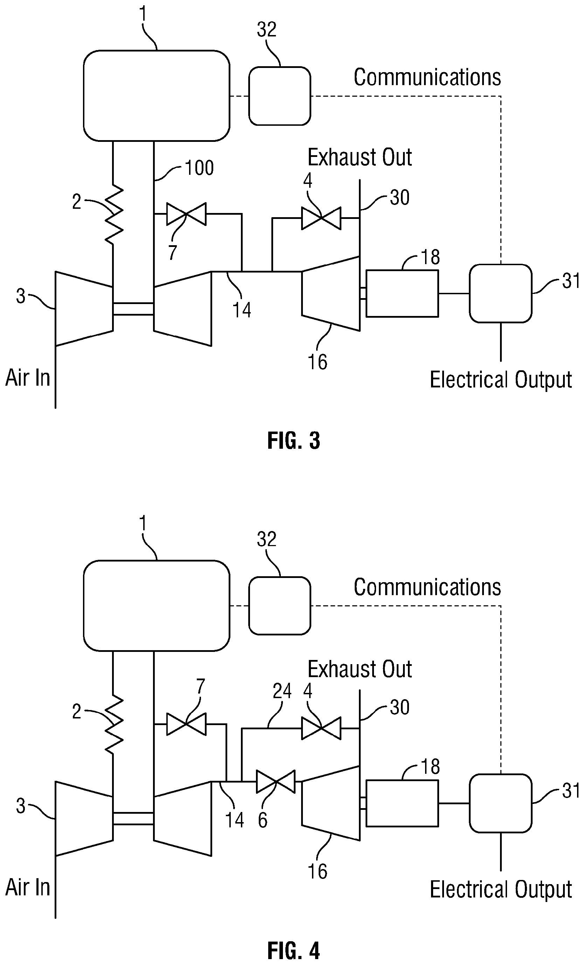

Figure 3 is a schematic of a first embodiment of the turbogenerator system in accordance with the present invention, in which the turbogenerator and turbocharger are in a series configuration and the turbogenerator system has a turbocharger waste-gate valve and a turbogenerator regulator valve;
Figure 4 is a schematic of a second embodiment of the turbogenerator system in accordance with the present invention, in which the turbogenerator and turbocharger are in a series configuration and the turbogenerator system has a turbocharger waste-gate valve, a turbogenerator regulator valve and a turbogenerator isolator valve;

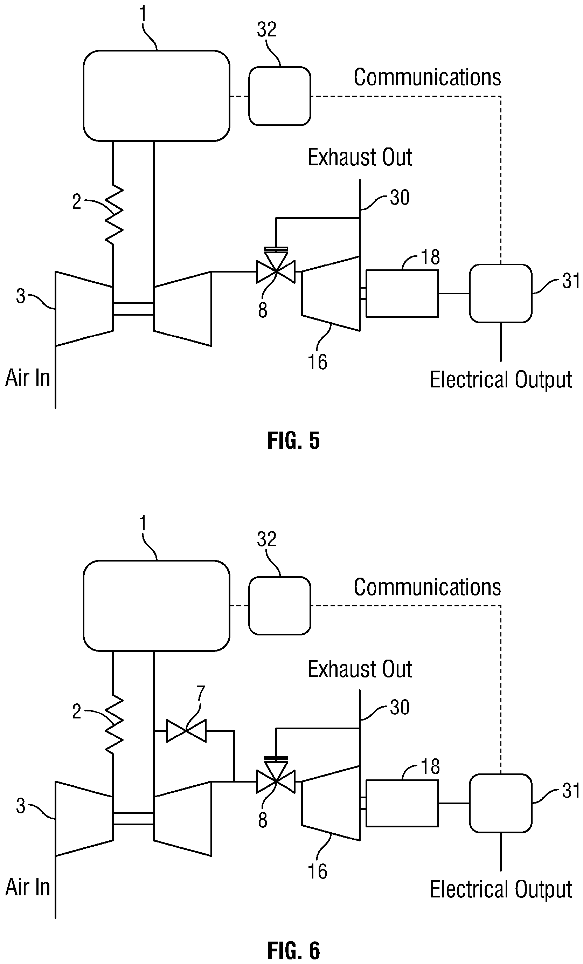

Figure 5 is a schematic of a third example of a turbogenerator system not in accordance with the present invention, in which the turbogenerator and turbocharger are in a series configuration and the turbogenerator system has a three-way turbogenerator regulator valve;
Figure 6 is a schematic of a third embodiment of a turbogenerator system in accordance with the present invention, in which the turbogenerator and turbocharger are in a series configuration and the turbogenerator system has a turbocharger waste-gate valve and a three way turbogenerator regulator valve;

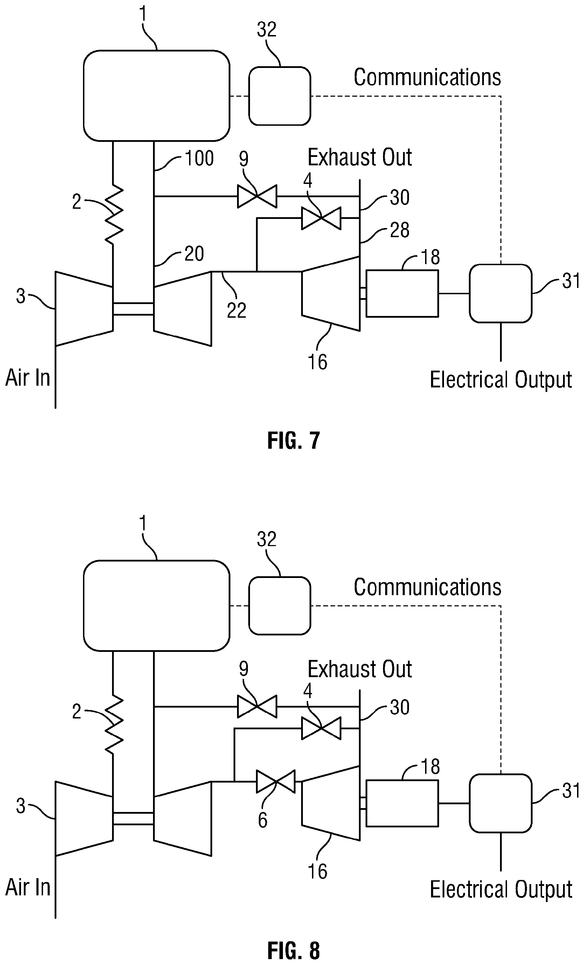

Figure 7 is a schematic of a fourth embodiment of a turbogenerator system in accordance with the present invention, in which the turbogenerator and turbocharger are in a series configuration and the turbogenerator system has a system waste-gate valve and a turbogenerator regulator valve;
Figure 8 is a schematic of an fifth embodiment of a turbogenerator in accordance with the present invention, in which the turbogenerator and turbocharger are in a series configuration and the turbogenerator system has a system waste-gate valve, a turbogenerator regulator valve and a turbogenerator isolator valve;

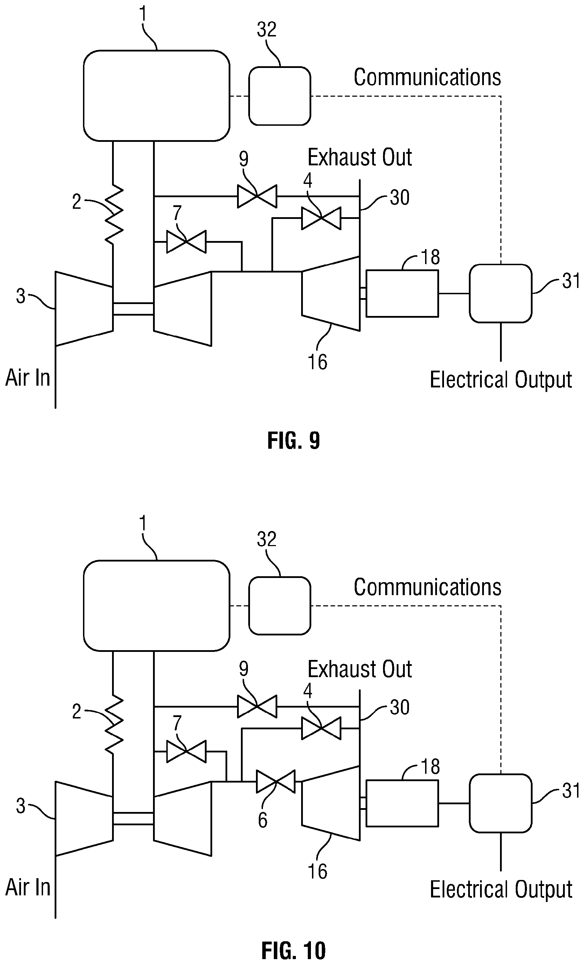

Figure 9 is a schematic of a sixth embodiment of a turbogenerator system in accordance with the present invention, in which the turbogenerator and turbocharger are in a series configuration and the turbogenerator system has a system waste-gate valve, a turbocharger waste-gate valve and a turbogenerator regulator valve;
Figure 10 is a schematic of a seventh embodiment of a turbogenerator system in accordance with the present invention, in which the turbogenerator and turbocharger are in a series configuration and the turbogenerator system has a system waste-gate valve, a turbocharger waste-gate valve, a turbogenerator regulator valve and a turbogenerator isolator valve;

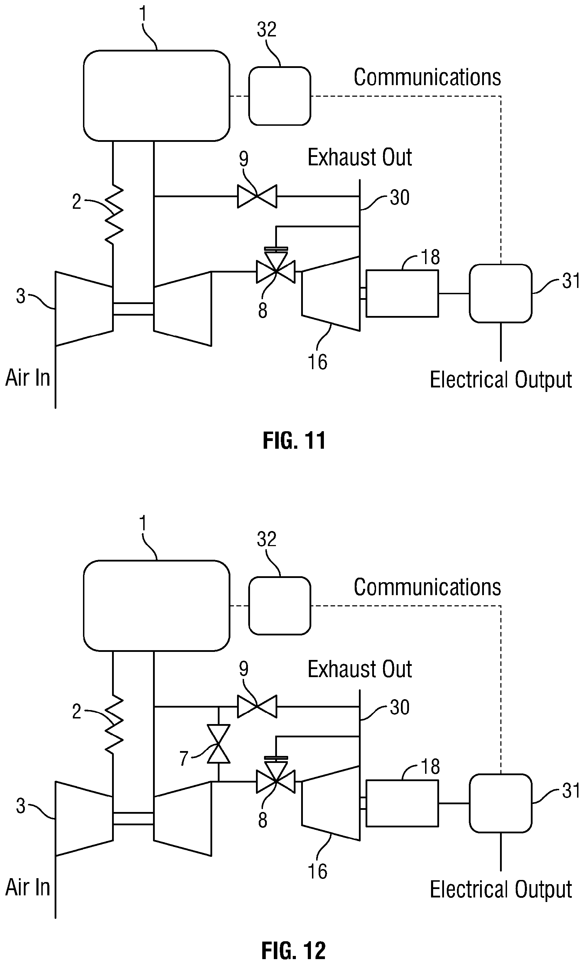

Figure 11 is a schematic of an eighth embodiment of a turbogenerator system in accordance with the present invention, in which the turbogenerator and turbocharger are in a series configuration and the turbogenerator system has a system waste-gate valve and a three-way turbogenerator regulator valve;
Figure 12 is a schematic of a ninth embodiment of a turbogenerator system in accordance with the present invention, in which the turbogenerator and turbocharger are in a series configuration and the turbogenerator system has a system waste-gate valve, a turbocharger waste-gate valve and a three-way turbogenerator regulator valve;

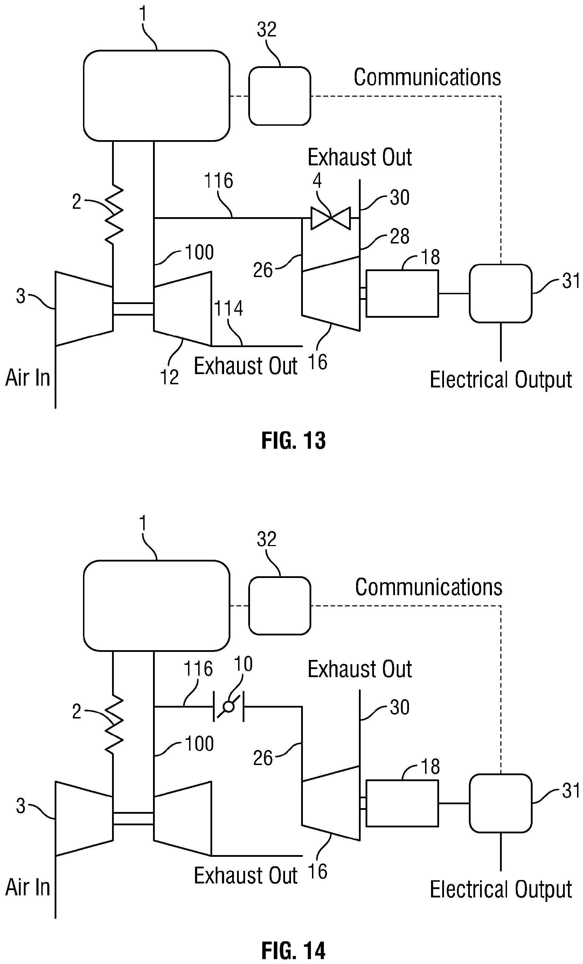

Figure 13 is a schematic of a fourth example of a turbogenerator system not in accordance with the present invention, in which the turbogenerator and turbocharger are in a parallel configuration and the turbogenerator system has a turbogenerator regulator valve;
Figure 14 is a schematic of a fifth example of a turbogenerator system not in accordance with the present invention, in which the turbogenerator and turbocharger are in a parallel configuration and the turbogenerator system has a turbocharger waste-gate throttle valve only;

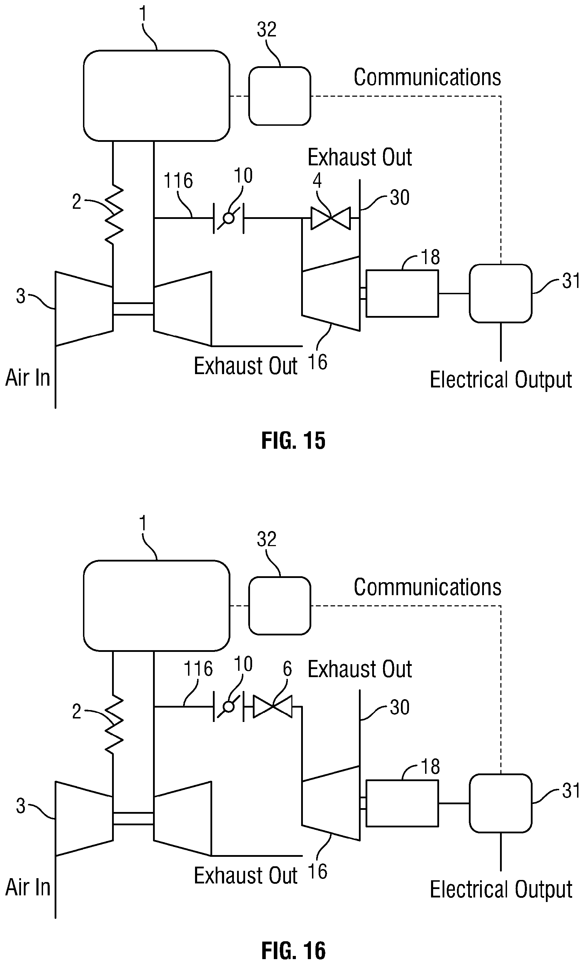

Figure 15 is a schematic of a tenth embodiment of a turbogenerator system in accordance with the present invention, in which the turbogenerator and turbocharger are in a parallel configuration and the turbogenerator system has a turbocharger waste-gate throttle valve and a turbogenerator regulator valve;
Figure 16 is a schematic of a sixth example of a turbogenerator system not in accordance with the present invention, in which the turbogenerator and turbocharger are in a parallel configuration and the turbogenerator system has a turbocharger waste-gate throttle valve and a turbogenerator isolator valve;

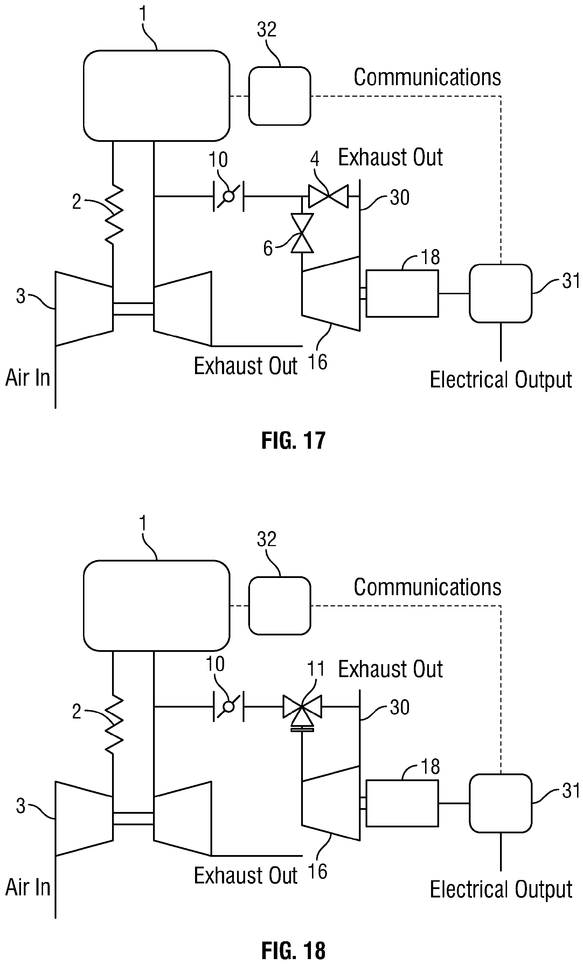

Figure 17 is a schematic of a eleventh embodiment of a turbogenerator system, in which the turbogenerator and turbocharger are in a parallel configuration and the turbogenerator system has a turbocharger waste-gate throttle valve, a turbogenerator regulator valve and a turbogenerator isolator valve;
Figure 18 is a schematic of a twelfth embodiment of the turbogenerator system in accordance with the present invention, in which the turbogenerator and turbocharger are in a parallel configuration and the turbogenerator system has a turbocharger waste-gate throttle valve and three-way turbogenerator regulator valve

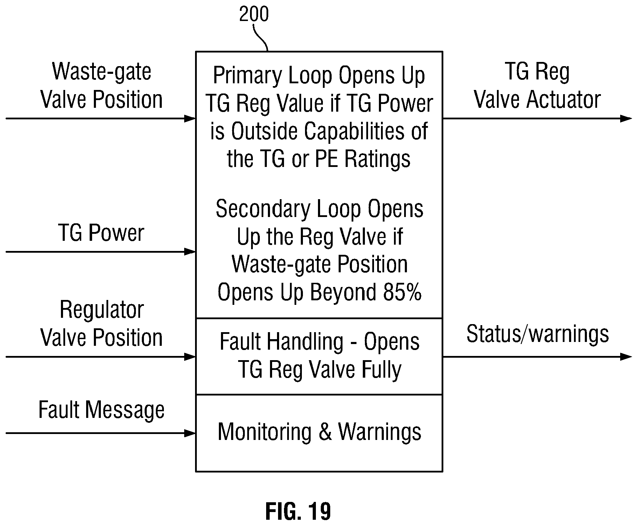

Figure 19 is a schematic of a processor for the turbogenerator system according to one of Figures 3 to 12 having the turbogenerator and turbocharger in a series configuration, showing the control events processed by the processor; and

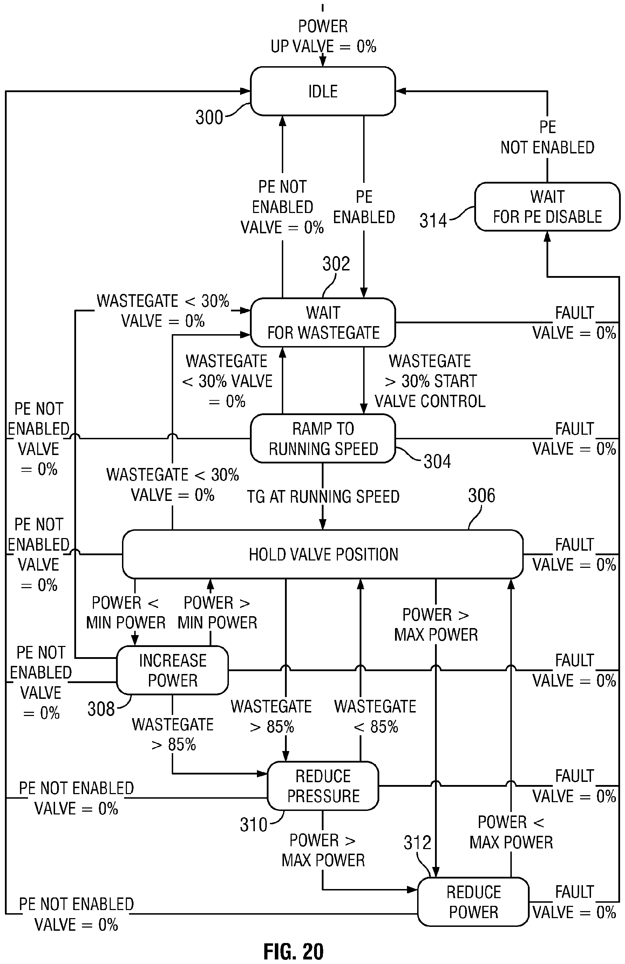

Figure 20 is a schematic flow diagram of the steps taking place in a processor in the turbogenerator system according to one of Figures 15 to 18 in the parallel configuration.

Referring initially to Figures 1 to 12, these show a schematic of a turbogenerator system in a series configuration having various permutations for a control valve configuration. The basic turbogenerator system will be described first.

As shown, a reciprocating engine 1, which may be a diesel or spark ignition reciprocating engine, receives incoming air from a turbocharger 3 by way of a charge air cooler 2. The engine 1 has an exhaust conduit 100 which exhausts into an inlet 20 of a turbine 12 of the turbocharger 3. An outlet 22 of the turbine 12 exhausts into a turbine exhaust conduit 14, which is fluidly connected to a turbogenerator 5, connected in series with the turbocharger 3. The turbogenerator 5 comprises a turbine 16, and an alternator 18 arranged on an output shaft of the turbine 16 for the conversion of shaft power into electrical power. The alternator 18 is connected to a power converter 31, which supplies an electrical output, as shown, and which is in communication with an engine control unit 32 described below.

The turbine exhaust conduit 14 exhausts into an inlet 26 of the turbine 16, and an outlet 28 of the turbine 16 exhausts into an exhaust conduit 30 for exhausting to the atmosphere. The turbogenerator 5 is thus connected in a series configuration such that the exhaust gas from the engine 1 passes through the turbocharger turbine 12 first and then through the turbogenerator turbine 16 next.

These features are common to all of the embodiments in accordance with the present invention and the examples no in accordance with present invention of Figures 1 to 12 and will not be described further, except for explaining the various valve permutations described below.

A first example valve permutation that is not in accordance with the present invention is shown in Figure 1 and comprises a simple turbogenerator regulator valve 4 connected in a branch line 24 between the turbine exhaust conduit 14 and the exhaust conduit 30. The regulator valve 4 thus has one port on the inlet 26 to the turbogenerator 5, and the other port connected to the outlet 28 of the turbogenerator 5. Accordingly, the turbogenerator regulator valve 4 serves to provide a bypass gas-flow from the input 20 of the turbogenerator 5 to the output 22. By controlling the regulator valve 4, the amount of gas-flow bypassing the turbogenerator 5 may be varied to control the power generated by the turbogenerator 5. The valve 4 may be either manual or automatic, and depending on the desired control may be an on-off valve or a modulating valve.

A second example valve permutation that is not in accordance with the present invention shown in Figure 2. In this second example the turbogenerator regulator valve 4 is supplemented by a turbogenerator isolator valve 6 provided in the turbine exhaust conduit 14 downstream of the branch 24 leading to the turbogenerator regulator valve 4. The isolator valve 6 is thus connected immediately upstream of the inlet 20 of the turbogenerator 5 and may be shut down to allow the turbogenerator 5 to be fully bypassed in the event that a fault in, or the need for maintenance of, the turbogenerator 5 arises. By shutting down the turbogenerator 5 in these circumstances, continued operation of the engine 1 remains possible. The valve 6 may be either manual or automatic.

A firstembodiment and valve permutation that is in accordance with the present invention is shown in Figure 3. In this first valve permutation a turbocharge waste-gate valve 7 is connected in a branch line 32 between the exhaust conduit 100 of the reciprocating engine 1 and the turbine exhaust conduit 14. The turbocharger waste-gate valve 7 may be an on-off valve or a modulating valve and may be manual or automatic. By regulating the valve 7, the main engine air to fuel ratio, namely the ratio of air fed into the engine 1 to the fuel being fed into the engine 1, both measured by mass, may be varied, since the pressure across the turbocharger turbine 12 will vary accordingly, increasing or decreasing the speed of the turbocharger 3 and thus the charge air pressure, and correspondingly increasing or decreasing air flow and engine combustion lambda, where lambda is the ratio of the total oxygen fed into an engine divided by the amount of oxygen required for stoichiometric combustion.

The first permutation shown in Figure 3 also includes the turbogenerator regulator valve 4 as described above.

A second embodiment and valve permutation is shown in Figure 4. The second valve permutation comprises all of the turbocharger waste-gate valve 7, the turbogenerator regulator valve 4 and the turbogenerator isolator valve 6 in combination.

A third example of a valve permutation not in accordance with the present invention is shown in Figure 5 and comprises a three-way turbogenerator regulator valve 8, which may be either manual or automatic. The three-way regulator valve 8 is connected in the turbine exhaust conduit 14 and the branch line 26 to control both exhaust flow into the inlet 26 of the turbine 16 and bypass flow bypassing the inlet 26 to the outlet 28 of the turbine 16 and directly from the exhaust conduit 14 to the exhaust conduit 30.

A third embodiment and valve permutation that is in accordance with the present invention is shown in Figure 6. The third valve permutation comprises a combination of the turbocharger waste-gate valve 7 and the three-way turbogenerator regulator valve 8 both connected as described above.

A fourth embodiment and valve permutation that is in accordance with the present invention is shown in Figure 7. The fourth valve permutation comprises an overall system waste-gate valve 9 connected between the exhaust conduit 100 from the engine 1 and the turbogenerator exhaust conduit 24 exhausting to atmosphere. The waste-gate valve 9 may be either manual or automatic, and may also be either an on-off valve or a modulating valve according to requirements. Thus, one port of the waste-gate valve 9 is effectively connected to the inlet 20 of the turbocharger turbine 12, and one port is connected to the outlet 28 of the turbogenerator turbine 16. This valve permutation also includes the turbogenerator regulator valve 4 as already described.

A fifth embodiment and valve permutation that is in accordance with the present invention is shown in Figure 8. The fifth valve permutation comprises a combination of the overall system waste-gate valve 9, the turbogenerator valve 4 and the turbogenerator isolator valve 6.

A sixth valve permutation that is in accordance with the present invention is shown in Figure 9. The sixth value permutation comprises a combination of the overall system waste-gate valve 9, the turbocharger waste-gate valve 7 and the turbogenerator regulator valve 4.

A seventh embodiment and valve permutation that is in accordance with the present invention is shown in Figure 10. The seventh valve permutation comprises a combination of the overall system waste-gate valve 9, the turbocharger waste-gate valve 7, the turbogenerator regulator valve 4 and the turbogenerator isolator valve 6.

An eighth embodiment and valve permutation that is in accordance with present invention is shown in Figure 11. The eighth valve permutation comprises a combination of the overall system waste-gate valve 9 and the three-way turbogenerator regulator valve 8.

A ninth embodiment and valve permutation that is in accordance with the present invention is shown in Figure 12. The ninth valve permutation comprises a combination of the overall system waste-gate valve 9, the turbocharger waste-gate valve 7 and the three-way turbocharger regulator valve 8, as described above.

Turning now to Figures 13 to 18, further embodiments, in accordance with the present invention, and examples, not in accordance with the present invention, of turbogenerator systems having a different turbogenerator configurations are shown. In these figures, the engine 1 and turbocharger 3 are connected as described above. The alternator 18 of the turbogenerator 5 is connected to the power converter 31, as before, and the power converter is in communication with the engine control unit 32, as before. However, the turbogenerator 5 is connected in a parallel configuration, such that the engine exhaust gas passes either through the turbocharger turbine 12 or through the turbogenerator turbine 16. More especially, the turbine 12 of the turbogenerator 3 exhausts to the atmosphere through a turbine exhaust conduit 114. A branch line 116 leads of the engine exhaust conduit 100 to the inlet 26 of the turbine 16 of the turbogenerator 5. The turbogenerator exhaust conduit 30, leading from the outlet 28 of the turbine 16, exhausts to atmosphere as before.

Such parallel configuration for the turbogenerator 5 is employed in all of the embodiments and examples shown in Figures 13 to 18 and will not be described further, except for explanation of further respective valve permutations.

Figure 13 shows a fourth example valve permutation that is not in accordance with the present invention, in which a turbogenerator regulator valve 4, as above, is connected between the inlet 26 and the outlet 28 of the turbine 16 around the turbogenerator turbine 16. The turbogenerator regulator valve 4 is thus connected between the branch line 116 and the exhaust conduit 30.

A fifth example valve permutation that is not in accordance with the invention shown in Figure 14. In this fifth example valve permutation a turbocharger waste-gate valve throttle valve 10 is connected in the branch line 116 from the exhaust conduit 100 to the inlet 26 of the turbogenerator turbine 16. The waste-gate throttle valve 10 thus has one port connected to the inlet 20 of the turbocharger turbine 12 and one port connected to the discharge of the turbocharger turbine 12. The waste-gate throttle valve 10 may be either manual or automatic and may regulate the exhaust gas flow as required.

A tenth embodiment and valve permutation that is in accordance with the present invention is shown in Figure 15. In the tenth valve permutation a combination of the turbocharger waste-gate throttle valve 10 and the turbogenerator regulator valve 4 is provided, connected as described above.

An sixth example valve permutation that is not in accordance with the present invention is shown in Figure 16. In this sixth example valve permutation, the turbocharger waste-gate throttle valve 10 is combined with a turbogenerator isolator valve 6, as shown. In this instance, both valves are connected in series in the branch line 116, with the turbogenerator isolator valve 6 connected downstream of the turbogenerator waste-gate throttle valve 10.

An eleventh embodiment and valve permutation that is in accordance with the present invention is shown in Figure 17. In this eleventh valve permutation, the turbogenerator regulator valve 4 is added to the combination of the turbocharger waste-gate throttle valve 10 and the turbogenerator isolator valve 6 as shown in Figure 16. In this instance, the turbogenerator regulator valve 4 is connected to a point 118 between the turbocharger waste-gate throttle valve 10 and the turbogenerator isolator valve 6 and to the exhaust conduit 30.

A twelfth embodiment and valve permutation that is in accordance with the present invention is shown in Figure 18. The twelfth valve permutation comprises the turbocharger waste-gate throttle valve 10 combined with a three-way turbogenerator regulator valve 11, which connects the downstream side of the turbocharger waste-gate throttle valve 10 both to the inlet 26 of the turbine 16 and to the outlet 28 of the turbine 16. The three-way turbogenerator regulator valve 11 may be either manual or automatic as before.

It will be appreciated that an appropriate selection of valve permutation from those described above, together with appropriate control of the valve or valves included therein, opens up the possibility for a very wide range of control variations for the exhaust flow characteristics from the reciprocating engine 1 according to the particular application. Although the various valves may as stated be manually controlled, in a preferred version of the invention, the valve or valves are computer controlled, and a processor 200 for the control of the valve or valves in the series configuration for the turbogenerator 5 is shown in Figure 19, and may be included in the engine control unit 32.

As shown in Figure 19, the processor 200 receives inputs from a variety of sensors representing, respectively, waste-gate valve position , turbogenerator power, regulator valve position, and fault monitoring. Depending on these inputs, the processor 200 monitors whether the turbogenerator power is outside the capabilities of either the turbogenerator 5 or power electronics ratings for a power electronics device controlling the turbogenerator 5, and opens up the turbogenerator regulator valve 4 and/or 8 as a primary loop in this event. The processor 200 supplies a control signal to a or a respective valve actuator (not shown) for controlling the turbogenerator regulator valve 4 or 8.

The processor 200 also monitors whether the waste-gate valve position indicates that the waste-gate valve 7 and / or 9 has opened up beyond 85%. In this event, again, the processor 200 sends out an actuating signal to the or the respective the valve actuator for the turbogenerator regulator valve 4 or 8.

In addition, the processor 200 monitors fault messages and warnings, and in the event of a fault opens the turbogenerator regulator valve 4 and/or 8 fully, whilst also issuing a warning signal.

In the case of the parallel configuration for the turbogenerator 5, as shown in Figures 13 to 18, again the preferred embodiment features a computer control system for processing and performing the steps as shown in the flow-chart of Figure 20. AS before, the computer control system may include a processor 200, and may be included in the engine control unit.

As shown in Figure 20, following power up, the engine 1 is placed in an idle condition in step 300. The processor monitors whether the power electronics have been enabled and advances the process to step 302 when they have been enabled. In step 302, the processor waits for activation of the waste-gate valve 10 and initiates valve control when the waste-gate valve 10 has been opened to at least 30%. In step 304, the processor ramps the turbogenerator 5 up to running speed. When the turbogenerator 5 is at running speed, the processor advances to step 306 and holds the valve positions for the turbogenerator regulator valve 4 and any other valves present.

In the meantime, the processor is monitoring all the valves consistently and initiates feedback signals to increase power if the power developed by the turbogenerator 5 is below the minimum power requirement (step 308 and, to return to holding the valve position (step 306) when the power again exceeds the minimum power; to reduce pressure (step 310) when the waste-gate valve is open greater than 85% and to hold the valve position (step 306) when the waste-gate valve decreases below 85%; and to reduce power (step 312) when the power developed by the turbogenerator 5 exceeds the maximum power and to return to holding the valve position (step 306) once the power has been reduced below the maximum power.

Throughout this process, the processor is also monitoring for faults and when the valve opening for the turbogenerator valve equals 0% sends a fault signal to disable the power electronics in step 314. Once the power electronics are no longer enabled, signals issued in the various steps would revert the engine 1 to the engine idle condition in step 300.

By these means, various control strategies are possible, for example as set out below:

### Strategy 1 - Control of the power developed by the turbogenerator

This strategy uses the regulator valve 4, 8 or 11 in both the series and the parallel configurations for the turbogenerator 5 to bypass gas flow around the turbogenerator 5, thereby to reduce the power output of the turbogenerator 5. In extreme circumstances, the power output may be reduced to close to zero. In particular, this may be required for certain grid connect regulations (including those specified by the VDE - the largest association for electronic standards in Europe). This strategy may also serve for extending the range of applicability of a particular turbogenerator design.

This strategy:
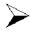 Allows the power generated by the turbogenerator 5 to be reduced in the event that the grid frequency increases beyond a certain limit..
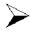 Allows the generated power to be steadily increased after the grid returns to a normal frequency condition.
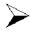 Allows the power to be reduced so that the power converter 31can produce adequate kVArs without exceeding its kVA rating.
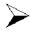 Allows the turbogenerator 5 to be run at a user specified operating point, which may be set for optimal efficiency and/or power and/or life, for a range of outputs of the engine 1. This allows a single design of turbogenerator to be adapted to the situation, where a range of designs would be required according to the prior art.
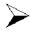 Allows greater flexibility in turbogenerator operating range, greater applicability to different prime movers, such as the engine 1, leading to better commercialisation potential.
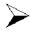 Allows the turbogenerator 5 to be fully by-passed to allow the prime mover (engine 1) to continue operation if a fault occurs within the turbogenerator and/or if maintenance is required.

### Strategy 2 - Main engine lambda (air to fuel ratio) control in series turbogenerator configurations

To maintain correct combustion and keep engine emissions within acceptable limits, the air to fuel mixture for the engine 1 needs to be regulated within a limited range by the engine control unit. In particular, for gas engines, this range can be quite small. In addition, during periods where the load demand is changing rapidly, it can be difficult for the engine controller to keep the air to fuel mixture within this range. In these circumstances, the load ramp rate must be reduced or emission limits could be breached and/or the engine could misfire.

To help manage the air to fuel ratio (lambda) when the turbogenerator 5 is connected in the series mode of Figures 1 to 12, a control strategy can be used to control the turbogenerator regulator valve 4 or 8, employing the power converter 31 and the engine control unit 32 in concert. If lambda is too low, the turbogenerator regulator valve 4, 8 could be opened to reduce the pressure drop across the turbogenerator / valve combination (5, 4, 8), which would increase the pressure developed across the turbocharger 3, increasing its speed, thereby increasing charge air pressure and therefore air flow to the engine 1.

Unlike most turbogenerators, using the power converter 31, we can choose a turbine speed. For any given mass flow through a turbine, pressure across it changes if the speed is changed (the higher the speed, the higher the pressure drop). Increasing the speed of the turbogenerator 5 will therefore increase the pressure across it. This will decrease the pressure across the output turbine 12 of the turbocharger 3, slowing it down. This will decrease the charge air pressure, decrease air flow to the engine 1 and decrease engine combustion lambda.

Conversely, if the turbogenerator speed is decreased, the pressure drop across the turbogenerator turbine 16 will decrease, increasing the pressure drop across the turbocharger turbine 12, speeding it up, increasing charge air pressure, increasing air mass flow and increasing lambda.

A valve control system can therefore be designed including a processor 200, which operates as follows:
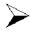 Lambda too low → open turbogenerator regulator valve 4, 8 and decrease turbogenerator speed
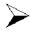 Lambda too high → close turbogenerator regulator valve 4, 8 and increase turbogenerator speed

### Strategy 3 - Exhaust manifold pressure control

If the exhaust manifold pressure rises above a safe limit and the turbogenerator 5 is installed in a series configuration, as shown in Figures 1 to 12, the turbogenerator regulator valve 4, 8, could be controlled to open, which would reduce the pressure at the exhaust manifold of the engine 1.

In addition, if the turbogenerator speed is also reduced, the pressure drop across it will decrease the exhaust pressure. A valve control system can therefore be designed to operate as follows:
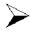 Pressure too high → open turbogenerator regulator valve 4, 8 and/or decrease turbogenerator speed

### Strategy 4 - Exhaust manifold temperature control

If the exhaust manifold temperature rises above a safe limit, if the turbogenerator is installed in a series configuration, as shown in Figures 1 to 12, the turbogenerator regulator valve 4, 8 could be controlled to open, which would reduce the pressure at the exhaust manifold of the engine 1, leading to reduced exhaust temperatures.

In addition, if the turbogenerator speed is also reduced, the pressure drop across it will decrease the exhaust pressure leading to decreased exhaust manifold temperatures. A valve control system can therefore be designed to operate as follows:
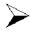 Temperature too high → open turbogenerator regulator valve 4, 8 and/or decrease turbogenerator speed

### Strategy 5 - Safe engine start-up and control in parallel turbogenerator configurations

This strategy further elaborates on the description of Figure 20 above, as to how various valve permutations would be operated when fitted to a turbogenerator system with a parallel configuration (Figures 13 to 18). In particular, it describes a safe start up procedure and how it could be used to decrease the pressure drop across the turbogenerator 5/ turbogenerator regulator valve 4, 11 combination, increasing the pressure drop across the waste-gate valve 9 of the engine 1, forcing it to close up to maintain exhaust manifold pressure for the engine 1. This could enable the engine's main waste-gate valve 9 to stay within its modulation range, allowing it to control the air flow of the main engine 1 for lambda control.

Further, using a similar characteristic as described in strategy 4, increasing the turbogenerator speed will therefore decrease the gas flow through the turbine 16 of the turbogenerator. This will increase the mass flow through the main turbine 12 of the turbocharger 3, speeding it up. This will increase the charge air pressure, increase air flow to the engine 1, and increase engine combustion lambda. Conversely, if the turbogenerator speed is decreased, the mass flow through the turbine 16 of the turbogenerator will increase, decreasing the mass flow through the turbine 12 of the turbocharger 3, slowing it down, decreasing charge air pressure, decreasing air mass flow and decreasing lambda.

A valve control system can therefore be designed including a processor adapted to perform the steps shown in Figure 20, which operates as follows:
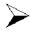 Lambda too low → close the waste-gate valve 10 of the turbocharger 3, increase turbogenerator speed
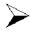 Lambda too high → open the waste-gate valve 10, reduce turbogenerator speed

### Strategy 6 - Allows the turbogenerator to be warmed up slowly

In some cases, in the case of both series and parallel configurations, there might be an advantage in warming up the turbogenerator 5 more slowly (e.g. to extend its service life). If this were the case, then, when the engine 1 is started, it would be advantageous to open the turbogenerator regulator valve 4, 8, 11, preventing most of the exhaust from the engine 1 from passing through the turbogenerator 5. The valve 4, 8, 11 could then be closed gradually over a period, slowly increasing the temperature of the turbogenerator 5 (and allowing it to produce power).

### Valve design considerations

The choice of valves for any particular permutation must suit the operating environment and also the need for the system to be fail-safe. Consequently, when implementing the various permutations for the turbogenerator regulator valve 4, 8, 11, the turbogenerator isolator valve 6, and the turbocharger and system waste-gate valves 7, 9, and 10, they must be selected with due regard to the harsh environment and speed of response required. Tests have shown the following to be the most appropriate:

| Function | Characteristics | Valve choice | Fail-safe condition (no power or pressure) |
|---|---|---|---|
| On-off TC waste-gate | Very high temperature, fast response, 100% seal required | Electronically controlled, pneumatically actuated popper valve | Normally closed |
| Modulating TC waste-gate | Very high temperature, slow response, good sealing | Electronically controlled, pneumatically or electrically actuated butterfly valve | Normally closed |
| On-off turbogenerator regulator valve | High temperature, fast response, 100% sealing | Electronically controlled, pneumatically actuated popper valve | Normally open |
| Modulating turbo generator regulator valve | High temperature, slow response, good sealing | Electronically controlled, pneumatically or electrically actuated butterfly valve | Normal open |
| turbo generator isolating valve | High temperature, 100% seal required | Manual or electrically driven gate voltage | Series configuration - normally open Parallel configuration - Normally closed |

In addition, valves should be selected having regard to the need for the prevention of turbocharger overspeed during maintenance etc. When the turbogenerator 5 is taken out of service by opening the turbogenerator regulator valve 4, 8, 11, it is important to provide some way of preventing the turbocharger 3 from spinning too quickly and causing excessive charge air pressure to be delivered to the engine 1.

In one example, the diameter of the turbogenerator valve may be selected to give some backpressure to the engine 1. However, if this is implemented, some pressure will be exerted across the turbogenerator 5, hence the need for some sort of turbogenerator isolation valve 6. Alternatively, the turbocharger waste-gate valve 7 can be opened, spilling some of the exhaust flow from the engine 1 through the waste-gate valve 7, and thereby slowing down the turbocharger 3.

The embodiments of the invention described above may provide various advantages, including:
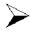 Regulation of the air to fuel ratio of the combustion mixture for an engine
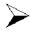 Controls the power available to the turbogenerator whilst not imposing limitations on the prime mover
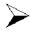 Allows a single design of turbogenerator to be used in a wide variety of applications
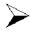 Enables the user to take a turbogenerator out of service to protect the turbogenerator equipment
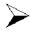 Enables the user to take the turbogenerator out of service to enable the engine to continue running
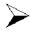 Enables a more optimum match of a turbogenerator to the application both technically and commercially by being able to match at the normal running condition rather than the maximum condition
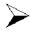 Allows the use of a smaller or possibly no electrical brake circuit to prevent the turbogenerator from overspeeding when power cannot be exported from the power converter for any reason
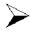 Could allow the system to ride through transient problems either with the engine (e.g. caused by poor combustion) or with the utility grid / electrical load
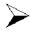 Allows the turbogenerator to be isolated from sources of energy to allow maintenance
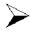 Extension of the life of the turbogenerator, by preventing it from being exposed to excessive loads / temperatures
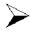 Allows the main engine to ramp up / drop load more quickly

## Claims

1. A method for recovering exhaust energy from exhaust fluid in an exhaust conduit (100) of a reciprocating engine (1), the method comprising:
driving a turbocharger turbine (12) of a turbocharger (3) by means of the exhaust fluid;
driving a turbogenerator turbine (16) of a turbogenerator (5) by means of the exhaust fluid;
arranging an alternator (18) on an output shaft of the turbogenerator turbine (16) to convert shaft power into electrical power; and
controlling operation of the turbogenerator turbine (16) in dependence upon operating conditions within the system, the step of controlling including:
regulating fluid flow to the turbogenerator turbine (16) by means of at least one turbogenerator regulator valve (4, 8, 11);
**characterised by** the step of monitoring whether a waste-gate valve (7, 9, 10) connected in parallel with the turbocharger turbine (16) has opened up beyond a predetermined amount, and if so generating actuating signals for actuating the at least one turbogenerator regulator valve (4, 8, 11) to regulate fluid flow to the turbogenerator turbine (16) and actuating the at least one turbogenerator regulator valve (4, 8, 11).

2. A method according to claim 1, in which the step of controlling comprises respectively controlling fluid flow into an inlet (26) of the turbogenerator turbine (16) and regulating an amount of fluid flow bypassing the inlet (26) of the turbogenerator turbine (16).

3. A method according to claim 1, in which the step of controlling comprises controlling the power developed by the turbogenerator (5) by regulating an amount of fluid flow bypassing an inlet (26) of the turbogenerator turbine (16).

4. A method according to claim 1, in which the step of controlling comprises controlling warming up of the turbogenerator (5) by regulating an amount of fluid flow bypassing an inlet (26) of the turbogenerator turbine (16).

5. A method according to claim 1, in which the turbogenerator (5) is in a series configuration with the turbocharger (3), an exhaust conduit (14) of the turbocharger turbine (12) being connected to an inlet (26) of the turbogenerator turbine (16), and in which the step of controlling comprises further controlling the air to fuel ratio of the air-fuel mixture for the reciprocating engine (1) by controlling a pressure drop in fluid from the exhaust conduit (14) of the turbocharger turbine (12) across the at least one turbogenerator regulator valve (4, 8, 11).

6. A method according to claim 1, in which the turbogenerator (5) is in a series configuration with the turbocharger (3), an exhaust conduit (14) of the turbocharger turbine (12) being connected to an inlet (26) of the turbogenerator turbine (16), and in which the step of controlling comprises controlling one of the pressure and the temperature in the exhaust conduit (100) of the reciprocating engine (1) by regulating an amount of fluid flow from the exhaust conduit (14) of the turbocharger turbine (12) bypassing the inlet (26) of the turbogenerator turbine (16) and/or modifying the turbogenerator (5) speed.

7. A method according to claim 1, in which the turbogenerator (5) is in a parallel configuration with the turbocharger (3), the exhaust conduit (100) of the reciprocating engine (1) being connected respectively to an inlet (20) of the turbocharger turbine (12) and by way of a branch line (26, 116) to an inlet (26) of the turbogenerator turbine (16), and in which the step of controlling comprises controlling start-up of the reciprocating engine (1) by controlling a pressure drop in fluid from the exhaust conduit (100) of the reciprocating engine (1) across the at least one turbogenerator regulator valve (4, 8, 11) and/or modifying the turbogenerator (5) speed.

8. A method according to claim 1, in which the step of controlling comprises the step of initiating feedback signals to increase power if the power developed by the turbogenerator (5) is below a minimum power requirement, and the step of returning to holding the turbogenerator regulator valve (4, 8, 11) position when the power again exceeds the minimum power requirement.

9. A method according to claim 8, in which the step of controlling comprises the step of reducing pressure when the waste-gate valve (7, 9, 10) is open greater than a second predetermined amount, and to hold the turbogenerator regulator valve (4, 8, 11) position when the waste-gate valve (7, 9, 10) decreases below the second predetermined amount.

10. A method according to claim 9, in which the step of controlling comprises the step of reducing power when the power developed by the turbogenerator (5) exceeds the maximum power, and a step of returning to holding the turbogenerator regulator valve (4, 8, 11) position when the power has been reduced below the maximum power.

11. A method according to claim 1, in which the step of controlling comprises regulating the air to fuel ratio of the air-fuel mixture for the reciprocating engine (1) to within a limited range by, if the air to fuel ratio is too low, opening a turbogenerator regulator valve (4, 8, 11) regulating an amount of fluid flow bypassing an inlet (26) of the turbogenerator turbine (16) and decreasing the turbogenerator (5) speed, and if the air to fuel ratio is too high, closing the turbogenerator regulator valve (4, 8, 11) regulating the amount of fluid flow bypassing an inlet (26) of the turbogenerator turbine (16) and increasing the turbogenerator (5) speed.

12. A method according to claim 1, in which the turbogenerator (5) is in a parallel configuration with the turbocharger (3), the exhaust conduit (100) of the reciprocating engine (1) being connected respectively to an inlet (20) of the turbocharger turbine (12) and by way of a branch line (26, 116) to an inlet (26) of the turbogenerator turbine (16), and in which the step of controlling comprises, if the air to fuel ratio is too low, closing a waste gate valve (7, 9, 10) connected in parallel with the turbocharger turbine (12) and increasing the turbogenerator (5) speed, and if the air to fuel ratio is too high, opening the waste-gate valve (7, 9, 10) and reducing the turbogenerator (5) speed.

## Patentansprüche

1. Ein Verfahren zum Rückgewinnen von Abgasenergie aus Abgasfluid in einem Abgaskanal (100) eines Kolbenmotors (1), wobei das Verfahren Folgendes beinhaltet:
Antreiben einer Turboladerturbine (12) eines Turboladers (3) mittels des Abgasfluids;
Antreiben einer Turbogeneratorturbine (16) eines Turbogenerators (5) mittels des Abgasfluids;
Anordnen eines Wechselstromgenerators (18) auf einer Abgangswelle der Turbogeneratorturbine (16), um Wellenleistung in elektrische Leistung umzuwandeln; und
Steuern des Betriebs der Turbogeneratorturbine (16) in Abhängigkeit von Betriebsbedingungen innerhalb des Systems, wobei der Schritt des Steuerns Folgendes umfasst:
Regeln des Fluidflusses zu der Turbogeneratorturbine (16) mittels mindestens eines Turbogeneratorregelventils (4, 8, 11);
**gekennzeichnet durch** den Schritt des Überwachens, ob sich ein Ladedruckregelventil (7, 9, 10), das mit der Turboladerturbine (16) parallel verbunden ist, über ein vorbestimmtes Maß hinaus geöffnet hat, und wenn ja, Erzeugen von Betätigungssignalen zum Betätigen des mindestens einen Turbogeneratorregelventils (4, 8, 11), um den Fluidfluss zu der Turbogeneratorturbine (16) zu regeln, und Betätigen des mindestens einen Turbogeneratorregelventils (4, 8, 11).

2. Verfahren gemäß Anspruch 1, in dem der Schritt des Steuerns jeweils das Steuern des Fluidflusses in einen Einlass (26) der Turbogeneratorturbine (16) und das Regeln eines Maßes an Fluidfluss, das an dem Einlass (26) der Turbogeneratorturbine (16) vorbeigeht, beinhaltet.

3. Verfahren gemäß Anspruch 1, in dem der Schritt des Steuerns das Steuern der von dem Turbogenerator (5) entwickelten Leistung durch Regeln eines Maßes an Fluidfluss, das an einem Einlass (26) der Turbogeneratorturbine (16) vorbeigeht, beinhaltet.

4. Verfahren gemäß Anspruch 1, in dem der Schritt des Steuerns das Steuern des Aufheizens des Turbogenerators (5) durch Regeln eines Maßes an Fluidfluss, das an einem Einlass (26) der Turbogeneratorturbine (16) vorbeigeht, beinhaltet.

5. Verfahren gemäß Anspruch 1, in dem der Turbogenerator (5) in einer Reihenkonfiguration mit dem Turbolader (3) ist, wobei ein Abgaskanal (14) der Turboladerturbine (12) mit einem Einlass (26) der Turbogeneratorturbine (16) verbunden ist, und in dem der Schritt des Steuerns ferner das Steuern des Luft-Kraftstoff-Verhältnisses des Luft-Kraftstoff-Gemisches für den Kolbenmotor (1) durch Steuern eines Druckabfalls in Fluid von dem Abgaskanal (14) der Turboladerturbine (12) über das mindestens eine Turbogeneratorregelventil (4, 8, 11) beinhaltet.

6. Verfahren gemäß Anspruch 1, in dem der Turbogenerator (5) in einer Reihenkonfiguration mit dem Turbolader (3) ist, wobei ein Abgaskanal (14) der Turboladerturbine (12) mit einem Einlass (26) der Turbogeneratorturbine (16) verbunden ist, und in dem der Schritt des Steuerns das Steuern eines von dem Druck und der Temperatur in dem Abgaskanal (100) des Kolbenmotors (1) durch Regeln eines Maßes an Fluidfluss von dem Abgaskanal (14) der Turboladerturbine (12), das an dem Einlass (26) der Turbogeneratorturbine (16) vorbeigeht, und/oder das Modifizieren der Geschwindigkeit des Turbogenerators (5) beinhaltet.

7. Verfahren gemäß Anspruch 1, in dem der Turbogenerator (5) in einer Parallelkonfiguration mit dem Turbolader (3) ist, wobei der Abgaskanal (100) des Kolbenmotors (1) jeweils mit einem Einlass (20) der Turboladerturbine (12) und über eine Zweigleitung (26, 116) mit einem Einlass (26) der Turbogeneratorturbine (16) verbunden ist, und in dem der Schritt des Steuerns das Steuern des Anlassens des Kolbenmotors (1) durch Steuern eines Druckabfalls in Fluid von dem Abgaskanal (100) des Kolbenmotors (1) über das mindestens eine Turbogeneratorregelventil (4, 8, 11) und/oder das Modifizieren der Geschwindigkeit des Turbogenerators (5) beinhaltet.

8. Verfahren gemäß Anspruch 1, in dem der Schritt des Steuerns den Schritt des Initiierens von Rückkopplungssignalen zur Leistungserhöhung, wenn die von dem Turbogenerator (5) entwickelte Leistung unter einer Mindestleistungsanforderung liegt, und den Schritt des Zurückkehrens zum Halten der Position des Turbogeneratorregelventils (4, 8, 11), wenn die Leistung die Mindestleistungsanforderung wieder überschreitet, beinhaltet.

9. Verfahren gemäß Anspruch 8, in dem der Schritt des Steuerns den Schritt des Verringerns des Drucks, wenn das Ladedruckregelventil (7, 9, 10) über ein zweites vorbestimmtes Maß hinaus geöffnet ist, und das Halten der Position des Turbogeneratorregelventils (4, 8, 11), wenn das Ladedruckregelventil (7, 9, 10) unter das zweite vorbestimmte Maß sinkt, beinhaltet.

10. Verfahren gemäß Anspruch 9, in dem der Schritt des Steuerns den Schritt des Verringerns der Leistung, wenn die von dem Turbogenerator (5) entwickelte Leistung die Höchstleistung überschreitet, und einen Schritt des Zurückkehrens zum Halten der Position des Turbogeneratorregelventils (4, 8, 11), wenn die Leistung unter die Höchstleistung verringert worden ist, beinhaltet.

11. Verfahren gemäß Anspruch 1, in dem der Schritt des Steuerns das Regeln des Luft-Kraftstoff-Verhältnisses des Luft-Kraftstoff-Gemischs für den Kolbenmotor (1) auf innerhalb eines begrenzten Bereichs durch, wenn das Luft-Kraftstoff-Verhältnis zu niedrig ist, Öffnen eines Turbogeneratorregelventils (4, 8, 11), das ein Maß an Fluidfluss, das an einem Einlass (26) der Turbogeneratorturbine (16) vorbeigeht, regelt, und Senken der Geschwindigkeit des Turbogenerators (5) und, wenn das Luft-Kraftstoff-Verhältnis zu hoch ist, Schließen des Turbogeneratorregelventils (4, 8, 11), das das Maß an Fluidfluss, das an einem Einlass (26) der Turbogeneratorturbine (16) vorbeigeht, regelt, und Erhöhen der Geschwindigkeit des Turbogenerators (5) beinhaltet.

12. Verfahren gemäß Anspruch 1, in dem der Turbogenerator (5) in einer Parallelkonfiguration mit dem Turbolader (3) ist, wobei der Abgaskanal (100) des Kolbenmotors (1) jeweils mit einem Einlass (20) der Turboladerturbine (12) und über eine Zweigleitung (26, 116) mit einem Einlass (26) der Turbogeneratorturbine (16) verbunden ist, und in dem der Schritt des Steuerns, wenn das Luft-Kraftstoff-Verhältnis zu niedrig ist, das Schließen eines Ladedruckregelventils (7, 9, 10), das mit der Turboladerturbine (12) parallel verbunden ist, und das Erhöhen der Geschwindigkeit des Turbogenerators (5) und, wenn das Luft-Kraftstoff-Verhältnis zu hoch ist, das Öffnen des Ladedruckregelventils (7, 9, 10) und das Verringern der Geschwindigkeit des Turbogenerators (5) beinhaltet.

## Revendications

1. Un procédé pour la récupération d'énergie à l'échappement provenant de fluide d'échappement dans une conduite d'échappement (100) d'un moteur alternatif (1), le procédé comprenant :
l'entraînement d'une turbine de turbocompresseur (12) d'un turbocompresseur (3) au moyen du fluide d'échappement ;
l'entraînement d'une turbine de turbogénérateur (16) d'un turbogénérateur (5) au moyen du fluide d'échappement ;
l'agencement d'un alternateur (18) sur un arbre de sortie de la turbine de turbogénérateur (16) afin de convertir une puissance sur l'arbre en puissance électrique ; et
le contrôle du fonctionnement de la turbine de turbogénérateur (16) en fonction de conditions de fonctionnement à l'intérieur du système, l'étape de contrôle incluant :
la régulation d'un écoulement de fluide vers la turbine de turbogénérateur (16) au moyen d'au moins une soupape de régulation de turbogénérateur (4, 8, 11) ;
**caractérisé par** l'étape de surveillance d'une soupape de décharge waste-gate (7, 9, 10) raccordée en parallèle avec la turbine de turbocompresseur (16) pour savoir si elle s'est ouverte au-delà d'une quantité prédéterminée, et si c'est le cas, de génération de signaux d'actionnement pour l'actionnement de l'au moins une soupape de régulation de turbogénérateur (4, 8, 11) afin de réguler un écoulement de fluide vers la turbine de turbogénérateur (16) et d'actionnement de l'au moins une soupape de régulation de turbogénérateur (4, 8, 11).

2. Un procédé selon la revendication 1, dans lequel l'étape de contrôle comprend respectivement le contrôle d'un écoulement de fluide dans une entrée (26) de la turbine de turbogénérateur (16) et la régulation d'une quantité d'écoulement de fluide contournant l'entrée (26) de la turbine de turbogénérateur (16).

3. Un procédé selon la revendication 1, dans lequel l'étape de contrôle comprend le contrôle de la puissance développée par le turbogénérateur (5) par régulation d'une quantité d'écoulement de fluide contournant une entrée (26) de la turbine de turbogénérateur (16).

4. Un procédé selon la revendication 1, dans lequel l'étape de contrôle comprend le contrôle d'un réchauffement du turbogénérateur (5) par régulation d'une quantité d'écoulement de fluide contournant une entrée (26) de la turbine de turbogénérateur (16).

5. Un procédé selon la revendication 1, dans lequel le turbogénérateur (5) est dans une configuration en série avec le turbocompresseur (3), une conduite d'échappement (14) de la turbine de turbocompresseur (12) étant raccordée à une entrée (26) de la turbine de turbogénérateur (16), et dans lequel l'étape de contrôle comprend le contrôle en sus du rapport air-carburant du mélange air-carburant pour le moteur alternatif (1) par contrôle d'une chute de pression dans du fluide provenant de la conduite d'échappement (14) de la turbine de turbocompresseur (12) d'un côté à l'autre de l'au moins une soupape de régulation de turbogénérateur (4, 8, 11).

6. Un procédé selon la revendication 1, dans lequel le turbogénérateur (5) est dans une configuration en série avec le turbocompresseur (3), une conduite d'échappement (14) de la turbine de turbocompresseur (12) étant raccordée à une entrée (26) de la turbine de turbogénérateur (16), et dans lequel l'étape de contrôle comprend le contrôle d'un élément parmi la pression et la température dans la conduite d'échappement (100) du moteur alternatif (1) par régulation d'une quantité d'écoulement de fluide provenant de la conduite d'échappement (14) de la turbine de turbocompresseur (12) contournant l'entrée (26) de la turbine de turbogénérateur (16) et/ou modification de la vitesse de turbogénérateur (5).

7. Un procédé selon la revendication 1, dans lequel le turbogénérateur (5) est dans une configuration en parallèle avec le turbocompresseur (3), la conduite d'échappement (100) du moteur alternatif (1) étant raccordée respectivement à une entrée (20) de la turbine de turbocompresseur (12) et par l'intermédiaire d'une ligne de branchement (26, 116) à une entrée (26) de la turbine de turbogénérateur (16), et dans lequel l'étape de contrôle comprend le contrôle d'une mise en route du moteur alternatif (1) par contrôle d'une chute de pression dans du fluide provenant de la conduite d'échappement (100) du moteur alternatif (1) d'un côté à l'autre de l'au moins une soupape de régulation de turbogénérateur (4, 8, 11) et/ou modification de la vitesse de turbogénérateur (5).

8. Un procédé selon la revendication 1, dans lequel l'étape de contrôle comprend l'étape d'émission de signaux de réaction afin d'augmenter une puissance si la puissance développée par le turbogénérateur (5) est en deçà d'une puissance requise minimale, et l'étape de retour à un maintien de la position de soupape de régulation de turbogénérateur (4, 8, 11) lorsque la puissance excède de nouveau la puissance requise minimale.

9. Un procédé selon la revendication 8, dans lequel l'étape de contrôle comprend l'étape de réduction d'une pression lorsque la soupape de décharge waste-gate (7, 9, 10) est ouverte par-delà une deuxième quantité prédéterminée, et de maintien de la position de soupape de régulation de turbogénérateur (4, 8, 11) lorsque la soupape de décharge waste-gate (7, 9, 10) diminue en deçà de la deuxième quantité prédéterminée.

10. Un procédé selon la revendication 9, dans lequel l'étape de contrôle comprend l'étape de réduction d'une puissance lorsque la puissance développée par le turbogénérateur (5) excède la puissance maximale, et une étape de retour à un maintien de la position de soupape de régulation de turbogénérateur (4, 8, 11) lorsque la puissance a été réduite en deçà de la puissance maximale.

11. Un procédé selon la revendication 1, dans lequel l'étape de contrôle comprend la régulation du rapport air-carburant du mélange air-carburant pour le moteur alternatif (1) afin qu'il tombe à l'intérieur d'une gamme limitée par, si le rapport air-carburant est trop bas, ouverture d'une soupape de régulation de turbogénérateur (4, 8, 11) régulant une quantité d'écoulement de fluide contournant une entrée (26) de la turbine de turbogénérateur (16) et diminution de la vitesse de turbogénérateur (5), et si le rapport air-carburant est trop élevé, fermeture de la soupape de régulation de turbogénérateur (4, 8, 11) régulant la quantité d'écoulement de fluide contournant une entrée (26) de la turbine de turbogénérateur (16) et augmentation de la vitesse de turbogénérateur (5).

12. Un procédé selon la revendication 1, dans lequel le turbogénérateur (5) est dans une configuration en parallèle avec le turbocompresseur (3), la conduite d'échappement (100) du moteur alternatif (1) étant raccordée respectivement à une entrée (20) de la turbine de turbocompresseur (12) et par l'intermédiaire d'une ligne de branchement (26, 116) à une entrée (26) de la turbine de turbogénérateur (16), et dans lequel l'étape de contrôle comprend, si le rapport air-carburant est trop bas, la fermeture d'une soupape de décharge waste-gate (7, 9, 10) raccordée en parallèle avec la turbine de turbocompresseur (12) et l'augmentation de la vitesse de turbogénérateur (5), et si le rapport air-carburant est trop élevé, l'ouverture de la soupape de décharge waste-gate (7, 9, 10) et la réduction de la vitesse de turbogénérateur (5).
